(19) Europäisches Patentamt
European Patent Office
Office européen des brevets

(11) **EP 2 662 975 A1**

(12) **EUROPEAN PATENT APPLICATION**

(43) Date of publication:
**13.11.2013 Bulletin 2013/46**

(51) Int Cl.:
*H02P 9/02* (2006.01)     *H02P 27/08* (2006.01)
*H02P 9/30* (2006.01)

(21) Application number: **12167402.2**

(22) Date of filing: **09.05.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Hamilton Sundstrand Corporation Windsor Locks, CT 06096-1010 (US)**

(72) Inventors:
• **Fang, Si Jian**
  **Carpentersville, IL Illinois 60110 (US)**
• **Himmelmann, Richard A.**
  **Beloit, WI Wisconsin 53511 (US)**

• **Moss, Steven J.**
  **Rockford, IL Illinois 61114 (US)**
• **Rozman, Gregory I.**
  **Rockford, IL Illinois 61114 (US)**

(74) Representative: **Tomlinson, Kerry John**
  **Dehns**
  **St Bride's House**
  **10 Salisbury Square**
  **London**
  **EC4Y 8JD (GB)**

Remarks:
Amended claims in accordance with Rule 137(2) EPC.

(54) **High voltage DC power generation**

(57)     A DC power system (100) includes a permanent magnet generator (PMG) (101), and an active rectifier (102) in electrical communication with the PMG. The active rectifier is adapted to actively rectify power output from the PMG if the PMG is operating at low speed, and the active rectifier is further adapted to passively rectify power output from the PMG if the PMG is operating at high speed.

FIG. 4A

**Description**

FIELD OF INVENTION

The subject matter disclosed herein relates generally to the field of power systems, and more particularly to high voltage direct current (DC) power generation with active rectification.

DESCRIPTION OF RELATED ART

Generally, current requirements for loads on a power system dictate the size, weight, and cost of said system. In power systems utilizing permanent magnet generators (PMG) and/or permanent magnet starters, an ideal balance would include a PMG-based power system capable of producing large torque ratings with minimal current at low speed, while also being capable of regulating DC output voltage at higher speeds. However, system output power is limited if the back-electromotive force (BEMF) of the PMG is relatively low, which may result in difficulty properly rating a power system for low speed operation without increasing its size to account for higher current operation. Furthermore, if the BEMF of the PMG is relatively high, pulse width modulated (PWM) active rectification is difficult, and therefore, DC output voltage may be difficult to regulate.

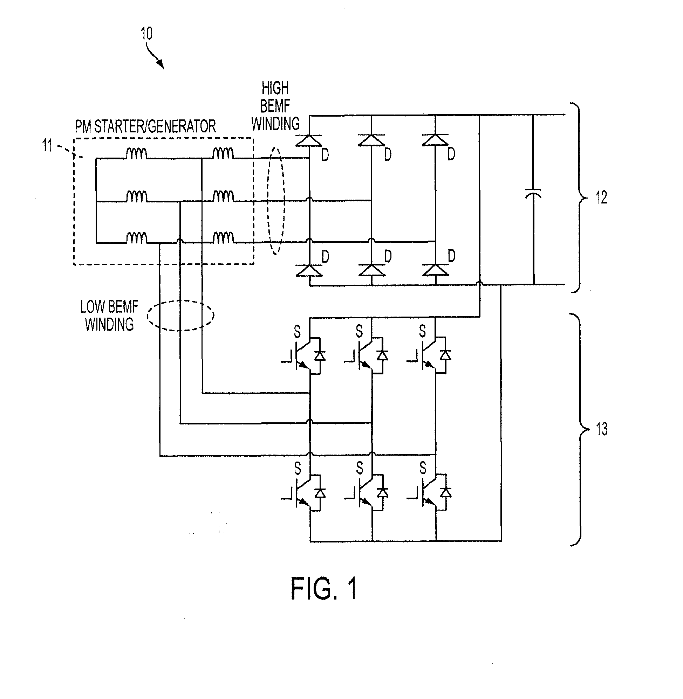

According to conventional power systems, for example system 10 which is illustrated in FIG. 1, two sets of windings (i.e., 6-phase) from a permanent magnet generator 11 may be used. A lower BEMF set of windings feeds to an active rectifier 13 and higher BEMF set of windings connects with a 6-diode passive rectifier 12. The system 10 performs starter/motoring functions with the active rectifier 13 at low speed and the passive rectifier 11 at high speed. As shown, the system 10 utilizes two physically separate rectifiers, each connected to a different set of windings on the PMG 11, and thus suffers from drawbacks associated with significant size and weight depending upon current requirements.

BRIEF SUMMARY

According to one aspect of the invention, a DC power system includes a permanent magnet generator (PMG), and an active rectifier in electrical communication with the PMG. The active rectifier is adapted to actively rectify power output from the PMG if the PMG is operating at low speed, and the active rectifier is further adapted to passively rectify power output from the PMG if the PMG is operating at high speed.

According to another aspect of the invention, a DC power system includes a permanent magnet generator (PMG), and a rectifier in electrical communication with the PMG; wherein the rectifier is configured to dynamically switch between an active rectification mode and a passive rectification mode in response to a change in a speed of the PMG.

Other aspects, features, and techniques of the invention will become more apparent from the following description taken in conjunction with the drawings.

BRIEF DESCRIPTION OF THE SEVERAL VIEWS OF THE DRAWINGS

Referring now to the drawings wherein like elements are numbered alike in the several FIGURES:

FIG. 1 illustrates a conventional DC power generating system;

FIG. 2 illustrates a DC power generating system, according to an example embodiment;

FIG. 3A illustrates a conventional rectification control portion of a DC power generating system;

FIG. 3B illustrates an active rectification control portion of a DC power generating system, according to an example embodiment;

FIG. 4A illustrates a DC power generating system, according to an example embodiment;

FIG. 4B illustrates a DC power generating system, according to an example embodiment;

FIG. 5 illustrates a graph of the operational characteristics including both active rectification mode and passive rectification mode of a DC power system, according to an example embodiment; and

FIG. 6 illustrates a plot of active to passive rectification transition of a power system, according to an example embodiment.

DETAILED DESCRIPTION

Embodiments of a DC power generating system are provided herein, with example embodiments being discussed below in detail.

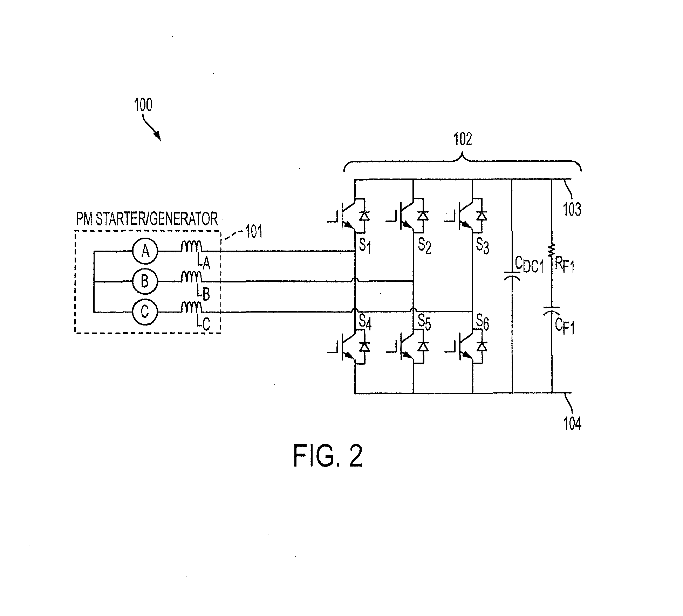

Turning to FIG. 2, a DC power system is shown. The DC power system 100 may be a power system of a vehicle (e.g., ground vehicle, marine vehicle, aircraft, etc.). As illustrated, the system 100 includes a permanent magnet generator (PMG) and/or permanent magnet starter 101. The PMG 101 may be a synchronous generator, and may produce 3-phase power (denoted with phases A, B, and C) across three windings (denoted $L_A$, $L_B$, and $L_C$).

The system 100 further includes active rectifier 102 in electrical communication with PMG 101, for example, through the windings $L_A$, $L_B$, and $L_C$. The active rectifier 102 includes a plurality of switches $S_1$, $S_2$, $S_3$, $S_4$, $S_5$, and $S_6$ configured to switch on/off in response to pulse width modulated (PWM) signals applied from a controller or gate driver (not illustrated). Each switch of the plurality of switches $S_1$, $S_2$, $S_3$, $S_4$, $S_5$, and $S_6$ may include a power semiconductor switch, for example a transistor, and a diode coupled across the semiconductor switch, for example across an emitter and collector of the transistor. Each transistor may be a junction-based transistor, field-effect transistor, or any other suitable transistor. Each diode may be a free-wheeling diode or any other suitable diode.

The active rectifier 102 further includes DC capacitor $C_{DC1}$ coupled across outputs of each switch of the plurality of switches $S_1$, $S_2$, $S_3$, $S_4$, $S_5$, and $S_6$. The active rectifier 102 further includes R-C damping circuitry coupled in parallel electrical communication with the DC capacitor $C_{DC1}$. The R-C damping circuitry includes a resistance $R_{F1}$ in series with a capacitance $C_{F1}$. The R-C damping circuitry is arranged to help stabilize issues of resonance formed by inductance of the PMG 101 and the DC output rails 103-104 of the active rectifier 102 during passive rectification operations (e.g., with switches open).

It is noted that as each switch of the plurality of switches $S_1$, $S_2$, $S_3$, $S_4$, $S_5$, and $S_6$ includes both a semiconductor switch and a diode, in a situation where all switches are open the active rectifier 102 begins to function as a passive rectification system. This is described more fully below.

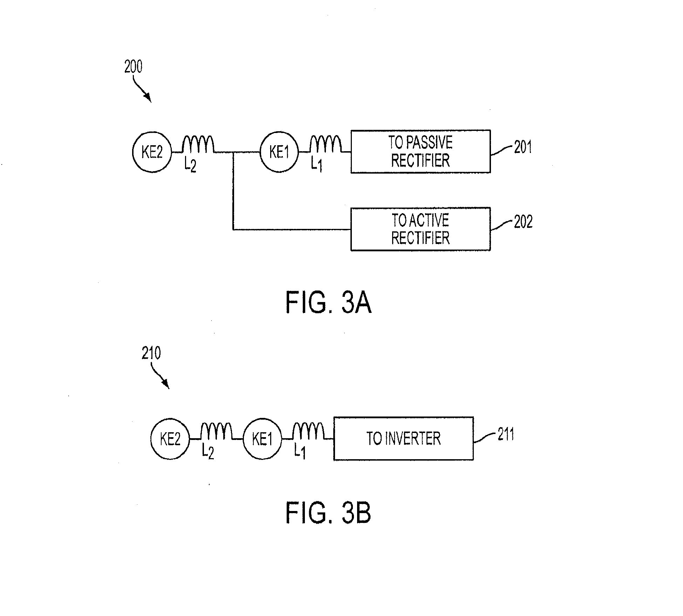

Turning to FIGS. 3A - 3B, different rectification control portions of a DC power generating system are illustrated. As shown in FIG. 3A, a conventional rectification control portion 200 utilizes both a passive rectifier 201 for high speed operation and an active rectifier 202 for low speed operation of a PMG (see FIG. 1). As shown, the portion 200 requires electrical connections to two sets of windings KE 1 and KE2 of a PMG (e.g., 6-phases).

In contrast, the rectification control portion 210 includes an electrical connection of one set of windings KE 1 and KE2 to an inverter or active rectifier 211. As the inductances L1 and L2 are cumulatively applied to the inverter 211, phase current of portion 210 is less than phase current of portion 200. For example, Equations 1 and 2, presented below, depict calculations to determine a Torque constant and phase current for the rectifier control portion 200:

$$\text{Equation 1: } K_T = m * \left( KE2 \right)$$

$$\text{Equation 2: } I_{ph\,base} = \frac{T}{m * \left( KE2 \right)}$$

In Equations 1 and 2, $m$ is a constant, $I_{ph\,base}$ is the phase current of the rectifier control portion 200, and $T$ is a torque requirement. In contrast, Equations 3 and 4, presented below, depict calculations to determine a Torque constant and phase current for the rectifier control portion 210:

$$\text{Equation 3: } K_T = m * \left( KE1 + KE2 \right)$$

$$\text{Equation 4: } I_{ph\,new} = \frac{T}{m * \left( KE1 + KE2 \right)}$$

Therefore, in achieving a same Torque T, the phase current $I_{ph\,new}$ for portion 210 is reduced as compared to the phase current $I_{ph\,base}$ for portion 200 as outlined in Equation 5, below:

$$I_{ph\,new} = \frac{1}{1 + \frac{KE1}{KE2}} I_{ph\,base}$$

Equation 5:

Accordingly, the current requirement for a system 100 with electrical connections between PMG 101 and active rectifier 102 is reduced as compared to using two sets of windings for separate passive and active rectifiers (e.g., FIGS. 1 and 3A).

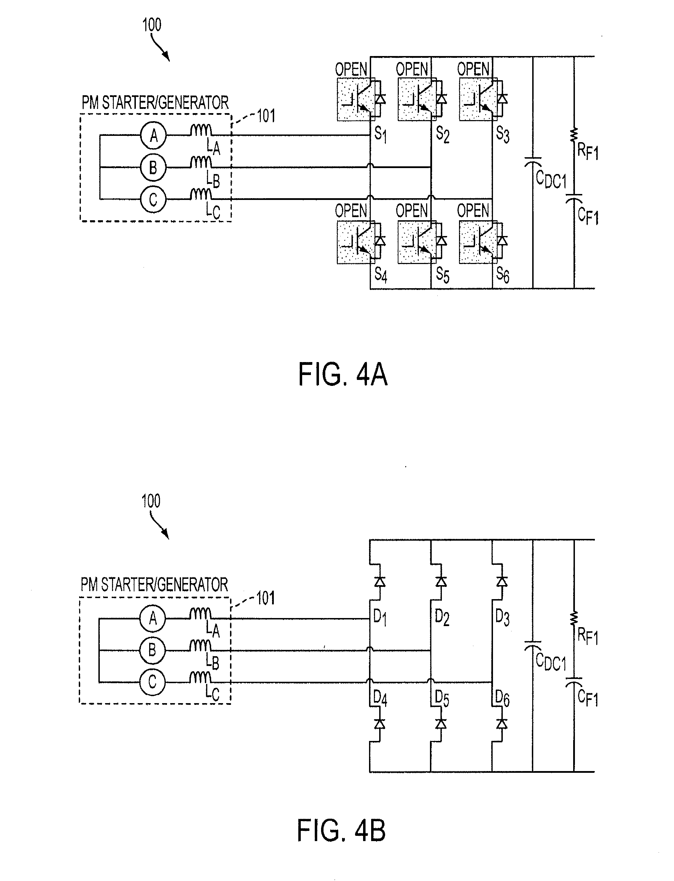

Turning to FIGS. 4A - 4B, the DC power generating system 100 is illustrated with all switches in an open condition (as previously described above), or in a passive rectification mode. As each switch of the plurality of switches $S_1$, $S_2$, $S_3$, $S_4$, $S_5$, and $S_6$ is open in FIG. 4A, an appropriate schematic representation of the system 100 in passive rectification mode may be represented by FIG 4B, which is substantially similar to a passive rectifier, and should be understood to offer similar functionality.

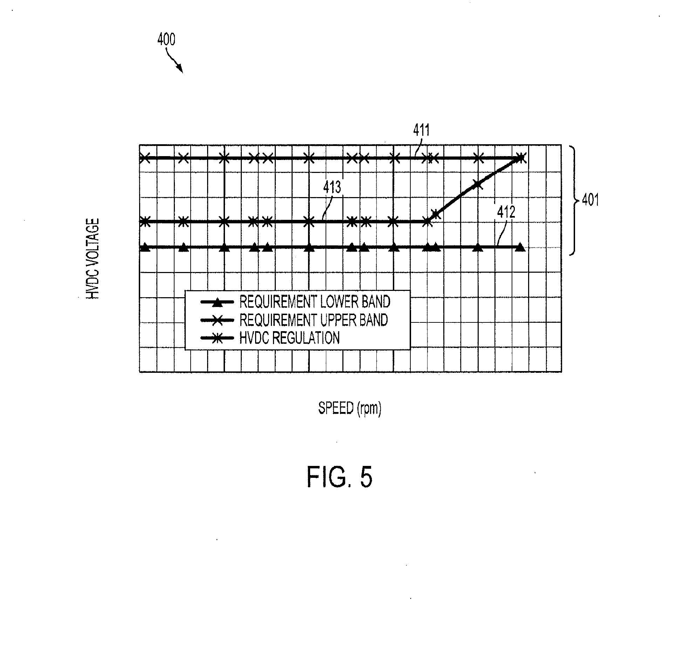

Turning to FIG. 5, graph 400 illustrates operational characteristics including both active rectification mode and passive rectification mode in response to speed of a PMG (e.g., PMG 101). As shown, an operational band 401 includes a range of high voltage DC values which are sufficient for proper operation of a plurality of loads being powered with the system 100. For example, an upper band limit 411 may be a highest or maximum value of regulated DC which should be supplied at the DC output bus of system 100. Further, a lower band limit 412 may be a lowest or minimum value of regulated DC which should be supplied at the DC output bus of the system 100.

As shown, the actual regulated DC level 413 of the system 100, during operation, includes a value relatively close to the lower band limit in lower speed operation of the PMG 101. This relatively low DC level minimizes power loss at the plurality of switches $S_1$, $S_2$, $S_3$, $S_4$, $S_5$, and $S_6$ during active rectification. As speed increases, the system 100 has at least two approaches to compensate for higher BEMF. The first approach is gradually approaching passive rectification mode by opening the active rectification switches as illustrated in FIG. 4B. The second approach is through adjustment of the regulated DC voltage to a relatively high level which is close to the upper band limit 411. As illustrated, DC bus voltage increases quickly at speeds where increasing BEMF of the PMG causing DC output power to become less stable, thus example embodiments approach passive rectification and regulate DC bus voltage shown by the increasing DC bus voltage of FIG. 5. The skilled reader will appreciate that the actual speed values of the low and high speed regions, and the speed value or range at which the system transitions between active and passive rectification, depend on the application of the power generation system and the parameters of its components. Thus "low speed" and "high speed" are intended to be relative terms, i.e. relating to lower and higher speed ranges.

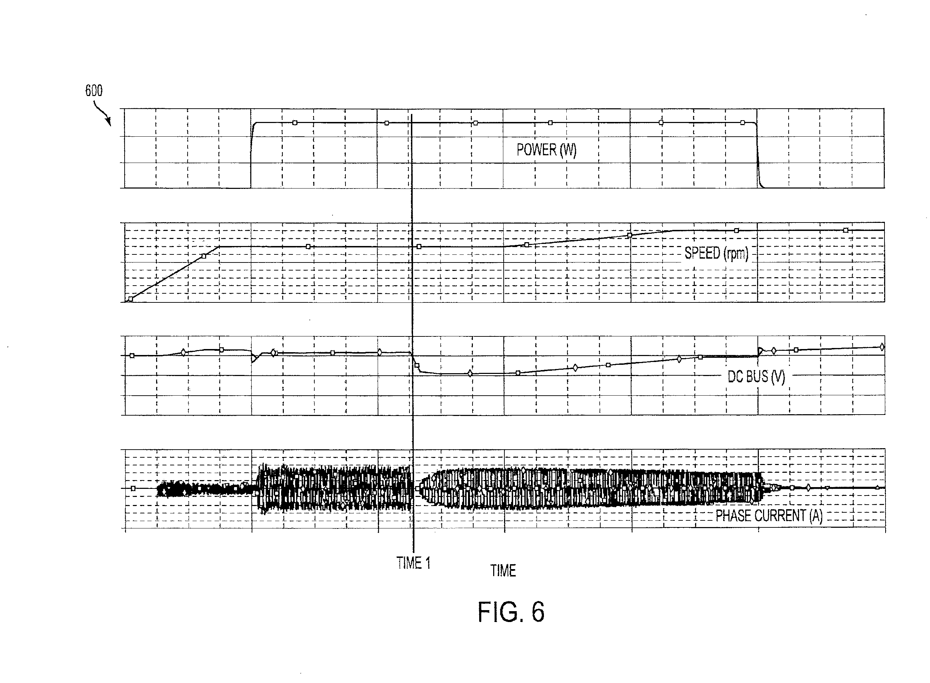

Thus, as described above, example embodiments of the present invention provide high voltage DC power systems capable of operating efficiently in a large speed-range of a PMG. The power system transitions from active rectification to passive rectification at high speed as shown in FIG 6.

As illustrated in plot 600 of FIG. 6, the power system is operated with active rectification prior to a time 1; and maintains DC bus voltage regulation. The power system transitions to passive rectification after time 1 to compensate higher BEMF , thereby maintaining a regulated DC bus voltage within appropriate limits, while also reducing the weight, cost, and size of the power system through elimination of supplementary rectification means.

The terminology used herein is for the purpose of describing particular embodiments only and is not intended to be limiting of the invention. While the description of the present invention has been presented for purposes of illustration and description, it is not intended to be exhaustive or limited to the invention in the form disclosed. Many modifications, variations, alterations, substitutions, or equivalent arrangements not hereto described will be apparent to those of ordinary skill in the art without departing from the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

**Claims**

1. A DC power system, comprising:

    a permanent magnet generator (PMG); and
    a rectifier in electrical communication with the PMG; wherein the rectifier is configured dynamically switch between an active rectification mode and a passive rectification mode in response to a change in a speed of the PMG.

2. The system of claim 1, wherein the PMG is a synchronous PMG.

3. The system of claim 1 or 2, wherein the rectifier includes a plurality of switches arranged in electrical communication with the PMG.

4. The system of claim 3, wherein the plurality of switches are configured to actively switch in the active rectification mode.

5. The system of claim 3 or 4, wherein the plurality of switches are configured to remain open in the passive rectification mode.

6. The system of claim 3, 4 or 5, wherein each switch of the plurality of switches includes a power-switching semiconductor and a diode arranged across the semiconductor.

7. The system of claim 6, wherein each switch of the plurality of switches includes a power-switching transistor and a diode arranged across an emitter and collector of the power-switching transistor.

8. The system of claim 7, wherein each power-switching transistor is arranged to actively switch in the active rectification mode, and wherein each power-switch transistor is configured to route electrical communication through a respective diode in the passive rectification mode.

9. The system of any preceding claim wherein the rectifier is configured to operate in the active rectification mode at lower speeds of the PMG and to operate in the passive rectification mode at higher speeds of the PMG.

10. The system of any of claims 1 to 8 wherein the rectifier is an active rectifier and the active rectifier is adapted to actively rectify power output from the PMG if the PMG is operating at low speed, and the active rectifier is further adapted to passively rectify power output from the PMG if the PMG is operating at high speed.

11. The system of claim 10, wherein the active rectifier includes a plurality of switches arranged in electrical communication with the PMG.

12. The system of claim 11, wherein the plurality of switches are configured to actively switch to rectify the power output from the PMG at low speed; preferably wherein the plurality of switches are configured to remain open to rectify the power output from the PMG at high speed.

13. The system of claim 11 or 12, wherein each switch of the plurality of switches includes a power-switching semiconductor and a diode arranged across the semiconductor.

14. The system of claim 13, wherein each switch of the plurality of switches includes a power-switching transistor and a diode arranged across an emitter and collector of the power-switching transistor.

15. The system of claim 14, wherein each power-switching transistor is arranged to actively switch to rectify the power output from the PMG at low speed and wherein each power-switch transistor is configured to route electrical communication through a respective diode to rectify the power output from the PMG at high speed.

**Amended claims in accordance with Rule 137(2) EPC.**

1. A DC power system (100), comprising:

a generator (101); and
a rectifier (102) in electrical communication with the generator; wherein the rectifier is configured to dynamically switch between an active rectification mode and a passive rectification mode in response to a change in a speed of the generator,
**characterised in that**:

the generator is a permanent magnet generator (PMG); and
the rectifier further comprises a resistance ($R_{F1}$) in series with a capacitance ($C_{F1}$) coupled across the output of the rectifier.

**2.** The system of claim 1, wherein the PMG is a synchronous PMG.

**3.** The system of claim 1 or 2, wherein the rectifier includes a plurality of switches ($S_1,S_2,S_3,S_4,S_5,S_6$) arranged in electrical communication with the PMG.

**4.** The system of claim 3, wherein the plurality of switches are configured to actively switch in the active rectification mode.

**5.** The system of claim 3 or 4, wherein the plurality of switches are configured to remain open in the passive rectification mode.

**6.** The system of claim 3, 4 or 5, wherein each switch of the plurality of switches includes a power-switching semiconductor and a diode arranged across the semiconductor.

**7.** The system of claim 6, wherein each switch of the plurality of switches includes a power-switching transistor and a diode arranged across an emitter and collector of the power-switching transistor.

**8.** The system of claim 7, wherein each power-switching transistor is arranged to actively switch in the active rectification mode, and wherein each power-switch transistor is configured to route electrical communication through a respective diode in the passive rectification mode.

**9.** The system of any preceding claim wherein the rectifier is configured to operate in the active rectification mode at lower speeds of the PMG and to operate in the passive rectification mode at higher speeds of the PMG.

**10.** The system of any of claims 1 to 8 wherein the rectifier is an active rectifier and the active rectifier is adapted to actively rectify power output from the PMG if the PMG is operating at low speed, and the active rectifier is further adapted to passively rectify power output from the PMG if the PMG is operating at high speed.

**11.** The system of claim 10, wherein the active rectifier includes a plurality of switches ($S_1,S_2,S_3,S_4,S_5,S_6$) arranged in electrical communication with the PMG.

**12.** The system of claim 11, wherein the plurality of switches are configured to actively switch to rectify the power output from the PMG at low speed; preferably wherein the plurality of switches are configured to remain open to rectify the power output from the PMG at high speed.

**13.** The system of claim 11 or 12, wherein each switch of the plurality of switches includes a power-switching semiconductor and a diode arranged across the semiconductor.

**14.** The system of claim 13, wherein each switch of the plurality of switches includes a power-switching transistor and a diode arranged across an emitter and collector of the power-switching transistor.

**15.** The system of claim 14, wherein each power-switching transistor is arranged to actively switch to rectify the power output from the PMG at low speed and wherein each power-switch transistor is configured to route electrical communication through a respective diode to rectify the power output from the PMG at high speed.

FIG. 1

FIG. 2

200

KE2 —$L_2$— KE1 —$L_1$— TO PASSIVE RECTIFIER —201

TO ACTIVE RECTIFIER —202

## FIG. 3A

210

KE2 —$L_2$— KE1 —$L_1$— TO INVERTER —211

## FIG. 3B

FIG. 4A

FIG. 4B

FIG. 5

FIG. 6

**EP 2 662 975 A1**

Europäisches
Patentamt

European
Patent Office

Office européen
des brevets

# EUROPEAN SEARCH REPORT

Application Number

EP 12 16 7402

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/214426 A1 (ASAO YOSHIHITO [JP] ET AL) 28 September 2006 (2006-09-28) * paragraphs [0009] - [0013], [0044]; claims 7,12; figures 1,4 * | 1-15 | INV. H02P9/02 H02P27/08 H02P9/30 |
| X | US 2003/222513 A1 (KURIBAYASHI M) 4 December 2003 (2003-12-04) * paragraphs [0022] - [0027]; figures 1,2 * | 1-15 | |
| X | US 2003/030409 A1 (KUSUMOTO KATSUHIKO [JP] ET AL) 13 February 2003 (2003-02-13) * paragraphs [0021] - [0025]; figures 1-3 * | 1-15 | |
| X | US 2003/141854 A1 (KURIBAYASHI MASARU [JP] ET AL) 31 July 2003 (2003-07-31) * paragraphs [0014], [0038] - [0041]; figures 1,2 * | 1-15 | |
|  |  |  | TECHNICAL FIELDS SEARCHED (IPC) |
|  |  |  | H02P |

The present search report has been drawn up for all claims

| Place of search | Date of completion of the search | Examiner |
|---|---|---|
| The Hague | 17 August 2012 | Gusia, Sorin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13

**ANNEX TO THE EUROPEAN SEARCH REPORT
ON EUROPEAN PATENT APPLICATION NO.** EP 12 16 7402

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2012

| Patent document cited in search report | | Publication date | Patent family member(s) | | Publication date |
|---|---|---|---|---|---|
| US 2006214426 | A1 | 28-09-2006 | EP 1717944 | A1 | 02-11-2006 |
| | | | JP 4113848 | B2 | 09-07-2008 |
| | | | JP 2005237084 | A | 02-09-2005 |
| | | | US 2006214426 | A1 | 28-09-2006 |
| | | | WO 2005078912 | A1 | 25-08-2005 |
| US 2003222513 | A1 | 04-12-2003 | DE 60317013 | T2 | 24-07-2008 |
| | | | EP 1369988 | A2 | 10-12-2003 |
| | | | JP 4236870 | B2 | 11-03-2009 |
| | | | JP 2004015847 | A | 15-01-2004 |
| | | | US 2003222513 | A1 | 04-12-2003 |
| US 2003030409 | A1 | 13-02-2003 | DE 60212772 | T2 | 28-06-2007 |
| | | | EP 1283595 | A2 | 12-02-2003 |
| | | | JP 3517405 | B2 | 12-04-2004 |
| | | | JP 2003061399 | A | 28-02-2003 |
| | | | KR 20030014593 | A | 19-02-2003 |
| | | | US 2003030409 | A1 | 13-02-2003 |
| US 2003141854 | A1 | 31-07-2003 | EP 1331725 | A2 | 30-07-2003 |
| | | | JP 3958593 | B2 | 15-08-2007 |
| | | | JP 2003225000 | A | 08-08-2003 |
| | | | US 2003141854 | A1 | 31-07-2003 |

EPO FORM P0459

For more details about this annex : see Official Journal of the European Patent Office, No. 12/82